# EUROPÄISCHE PATENTSCHRIFT

(11) **EP 0 703 880 B1**
(45) Veröffentlichungstag und Bekanntmachung des Hinweises auf die Patenterteilung: **29.01.1997**
(21) Anmeldenummer: 94916827.2
(22) Anmeldetag: 03.06.1994
(51) Int. Cl.: C04B 28/06, C04B 7/32

(54) **VERFAHREN ZUR HERSTELLUNG VON VERBUNDWERKSTOFF-FORMTEILEN**
METHOD OF PRODUCING COMPOSITE MOULDINGS
PROCEDE POUR LA FABRICATION DE PIECES MOULEES EN MATERIAU COMPOSITE

(30) Priorität: 03.06.1993 AT 1083/93
(43) Veröffentlichungstag der Anmeldung: 03.04.1996
(73) Patentinhaber: VIMPEX-TCD Technische Forschungsges.m.b.H., 1010 Wien (AT)
(72) Erfinder: KUNBARGI, Hassan, A-1010 Wien (AT); SCHUBERT, Bärbel, D-04129 Leipzig (DE)
(74) Vertreter: Pfeifer, Otto, Dipl.-Ing.
(86) Internationale Anmeldenummer: AT9400072
(87) Internationale Veröffentlichungsnummer: WO9429232

(56) Entgegenhaltungen:
- EP-A- 0 353 062
- DE-A- 3 319 017
- FR-A- 929 396
- US-A- 4 957 556
- CHEMICAL ABSTRACTS, vol. 85, no. 18, 1. November 1976, Columbus, Ohio, US; abstract no. 129535n, T. TSUBOI ET AL. Seite 389 ; & JP,A,51 073 525 (ID.)
- CHEMICAL ABSTRACTS, vol. 90, no. 8, 19. Februar 1979, Columbus, Ohio, US; abstract no. 60104e, H. ISHII ET AL. Seite 321 ; & JP,A,53 121 021 (ID.)
- CHEMICAL ABSTRACTS, vol. 92, no. 8, 25. Februar 1980, Columbus, Ohio, US; abstract no. 63603u, Y. MINESHITA ET AL. Seite 312 ; & JP,A,54 116 023 (ID.)
- CHEMICAL ABSTRACTS, vol. 100, no. 6, 6. Februar 1984, Columbus, Ohio, US; abstract no. 38766a, MATSUSHITA ELECTRIC WORKS LTD. Seite 260 ; & JP,A,58 161 984 (ID.)

## Beschreibung

Die Erfindung betrifft ein Verfahren zur Herstellung von Verbundwerkstoff-Formteilen jeglicher Werkstoffdichte, bestehend aus den Hydratationsprodukten eines mineralischen Bindemittels und reproduzierbaren Rohstoffen als Leichtzuschlag- bzw. Bewehrungsstoff.

Es ist bekannt, daß zur Herstellung von Verbundwerkstoff-Formteilen reproduzierbare Rohstoffe, insbesondere lignocellulosehaltige und cellulosehaltige Materialien, aufbereitet als Leichtzuschlagpartikel oder Bewehrungsspan, sowie handelsübliche Portlandzemente verwendet werden. Nachteilig ist, daß die Verwendung von Portlandzement den Einsatz der als Leichtzuschlagstoff oder Bewehrung fungierenden Partikel aus reproduzierbaren Rohstoffen in der Weise beschränkt, daß artenmäßig nur solche zu verwenden sind, deren wasser- bzw. alkalilösliche Inhaltsstoffe keinen negativen Einfluß auf die Zementhydratation ausüben. Insbesondere die Anwesenheit von Zuckern bzw. Gerbstoffen verursacht ab 0,25 %, bezogen auf Portlandzement, schwerwiegende Erhärtungsstörungen, die sich in einer Verzögerung bzw. bei Anteilen von >1 % in einer Verhinderung des Abbindens äußern. In der Praxis existieren deshalb für die Verwendung reproduzierbarer Rohstoffe bei der Produktion derartiger Formteile Eignungslisten, die den Einsatz dieser die Zementhydratation inhibierenden Rohstoffe, z.B. Lärchenholz, ausschließen. Ein weiterer Nachteil bei der Verwendung von Portlandzement als Matrix ist dessen langsames Abbinden, wodurch bei der Herstellung der Formkörper lange Abbindezeiten eingehalten werden müssen, die bei Formteilen niedriger Dichte (z.B.Holzwolle-Leichtbauplatten, Holzbeton) Ausschalzeiten bis zu 48 Stunden, bei Formteilen hoher Dichte (z.B. zementgebundene Spanplatten) Verspannungszeiten bis zu 24 Stunden bedingen.

Auf die Bemühungen, die Palette der reproduzierbaren Rohstoffe, insbesondere bezogen auf verschiedene Holzarten, zu erweitern bzw. den Abbindevorgang zu verkürzen, weisen die zahlreichen Patente auf diesem Gebiet hin. Bekannt ist die Verwendung sogenannter Abbindebeschleuniger. Der Erfolg ihrer Verwendung wird maßgebend von der Inhibitorkonzentration der reproduzierbaren Rohstoffe bestimmt.Niedrige Gehalte (kleiner als 0,25 %, bezogen auf Zement), die eine Verzögerung der Zementhydratation bewirken, lassen sich in ihrer Wirkung mit geringen Beschleunigerzusätzen (< 1 %) kompensieren. Höhere Gehalte bedingen höhere Zusätze an Beschleunigern, die jedoch dazu führen können, daß der Abbindeprozeß außer Kontrolle gerät. Das bedeutet, daß der Produktionsvorgang zur Formteilherstellung nicht mehr gezielt gesteuert werden kann. Der Einsatz von Abbindebeschleunigern beschränkt sich deshalb auf Holzarten mit niedrigen Inhibitoranteilen. Aus der DE-PS 34 06 895 ist ein Verfahren zur Herstellung zementgebundener Holzfaserformkörper bekannt, das den Einsatz von Holzarten mit hohen Inhibitoranteilen ermöglichen soll. Das Verfahren beruht auf dem Einsatz amorpher Kieselsäure, die auf Grund ihrer hohen spezifischen Oberfläche eine puffernde Wirkung gegenüber den Inhibitoren haben soll. Analog zu anderen konjugierten Zementen sind jedoch auch im System Zement/amorphe Kieselsäure verlängerte Abbindezeiten und verringerte Frühfestigkeiten zu erwarten, wodurch die Wirtschaftlichkeit dieses Verfahrens in Frage gestellt ist.

Ein Verfahren zur Verkürzung der Abbindezeiten zur Herstellung plattenförmiger Verbundwerkstoffe wird in dem EP 0 340 620 A2 beschrieben. Das Verfahren benutzt ein Bindemittel bestehend aus 20 bis 80 Gew.-% Portlandzement, 10 bis 40 Gew.-% Gips und 10 bis 40 Gew.-% aluminiumoxidhaltigen Komponenten, wobei das Abbindewasser als Oberflächenwasser mit den Spänen in die Mischung eingebracht wird, sodaß die Mischungsfeuchte des Vlieses 25 bis 40 Gew.-% beträgt. Grundlage der Schnellerhärtung, die bei Preßtemperaturen von ca. 80°C Preßzeiten von <10 Minuten erreicht,ist der bei der Hydratation der Mischung kurz nach der Wasserzugabe sich bildende Ettringit. Nachteilig bei diesem Verfahren ist die Beschränkung auf plattenförmige Verbundwerkstoffe, die infolge des mit der Herstellung verbundenen Preßregimes gegeben ist. Verbundwerkstoffe, in denen reproduzierbare Rohstoffe als Bewehrungspartikel fungieren und die eine Art Leichtbeton darstellen, lassen sich nach diesem Verfahren nicht herstellen. Außerdem erweist sich als Nachteil, daß diese kurzen Preßzeiten nur bei gleichzeitiger Anwendung einer Preßtemperatur von >50°C möglich sind. Desgleichen muß befürchtet werden, daß die auf Grund der frei wählbaren Mischungsverhältnisse der Einzelkomponenten des Bindemittels bei der primären Erhärtung gegebene unkontrollierte und unvollständige Umsetzung der Einzelphasen zu Ettringit bei einer Nacherhärtung infolge Feuchteeinwirkung zu Ettringittreiben führen kann, sodaß eine Wetterfestigkeit der Platten, hergestellt nach diesem Verfahren, nicht grundsätzlich gegeben ist. Aus EP-A-0 353 062 und Chemical Abstracts, Bd. 25, No. 18, 129535n, ist weiterhin die Verwendung von Aluminatzement im Gemisch mit Anhydrit und Portlandzement als Bindemittel zur Herstellung von dauerbeständigen Verbundwerkstoff-Formteilen bekannt, wobei Bewehrungsstoffe, insbesondere Fasern, beigefügt werden können.

Der Erfindung liegt die Aufgabe zugrunde, ein Verfahren auszubilden, das es gestattet, reproduzierbare Rohstoffe, unabhängig von dem Anteil der wasserlöslichen Bestandteile, die bei Portlandzement zu starken Abbindestörungen führen, bei der Herstellung von Verbundwerkstoff-Formteilen jeglicher Rohdichte einzusetzen und die Abbindezeiten so zu verkürzen, daß die Wirtschaftlichkeit der Herstellung gegenüber den bekannten Verfahren wesentlich verbessert werden kann, ohne daß die Einhaltung der für die entsprechend hergestellten Verbundwerkstoff-Formteile vorgegebenen Normwerte gefährdet wird.

Diese Aufgabe wird dadurch gelöst, daß ein Bindemittel eingesetzt wird, das sehr kurze Abbindezeiten hat und durch die in einer Vielzahl reproduzierbarer Rohstoffe enthaltenen Inhaltsstoffe, wie wasserlösliche Zucker und Gerbstoffe bzw. alkalisch abbaubare Hemicellulosen, in seiner Hydratationsreaktion nicht negativ beeinflußt wird und auch in Anwesenheit dieser sogenannten Inhibitoren Festigkeiten entwickelt, die eine Manipulierbarkeit der Werkstoffe nach kurzer Abbindezeit ermöglicht. Es wurde gefunden, daß ein Bindemittel auf der Basis von Calciumaluminatsulfat diese Eigenschaften aufweist. Das erfindungsgemäß verwendete Bindemittel wird im weiteren als Ultra-Zement bezeichnet und besteht aus 10 bis 30 Gew.-% Calciumaluminatsulfat, 5 bis 20 Gew.-% löslichem Anhydrit und 50 bis 85 Gew.-% Portlandzement. Dieser Zement hydratisiert in extrem kurzer Zeit unter Ausbildung hoher Festigkeiten, die durch die günstige Kombination von Ettringit (C₆AS₃.32H) und Calciumaluminathydrat (CA.10H) bewirkt werden. Die aufeinander abgestimmte Phasenzusammensetzung des Zementes führt zu einem kontrollierten Erhärten, wodurch ein nachträgliches Ettringittreiben ausgeschlossen werden kann Über die Variation der Phasenzusammensetzung des Ultra-Zementes ist es möglich, seine Erstarrungszeiten gezielt zu beeinflussen.

Erfindungsgemäß kann der Ultra-Zement als Matrix zur Herstellung von Formbauteilen niederer Rohdichte und damit zur Herstellung von Dämmstoffen, aber auch zur Herstellung von Formbauteilen mittlerer und hoher Rohdichte, speziell zur Herstellung von Bauplatten eingesetzt werden. Bei der Herstellung der Bauplatten kann auf Grund der kurzen Erhartungszeiten auf den Einsatz der bekannten Spanngerüste verzichtet werden.

Als Leichtzuschlagstoffe können, wie bereits angegeben, alle Arten Holz und andere pflanzliche reproduzierbare Rohstoffe, wie z.B. Zuckerrohrbagasse, Kokosnußfasern und -mark, Getreide- und Reisstroh, Flachs- und Hanfschäben, Baumwolle-, Jute-, Raps-, Mais- und Sonnenblumenstengel bzw. deren Mark, desweiteren Bambusse und Gräser, speziell Sorten der Art Miscanthus sinensis, in der entsprechend mechanisch aufbereiteten Form eingesetzt werden.

Die gleichen Rohstoffe, außer dem Mark der speziellen Pflanzen, können unter Einsatz des Ultra-Zementes in der zu einem span- oder faserförmigen Partikel aufbereiteten Form zur Herstellung von Bauplatten verwendet werden, wobei sie in diesem Verbundwerkstoff eine Bewehrungsaufgabe übernehmen.

Zum Aufzeigen der Vorteile des Ultra-Zementes gegenüber den bekannterweise eingesetzten Zementen, speziell Portlandzement, ist das Messen der Hydratationswärmeentwicklung mit Hilfe der Differential-Calorimeter-Analyse (DCA) ein sensibles Kriterium, wie im nachfolgenden Ausführungsbeispiel erläutert werden soll.

### Beispiel 1

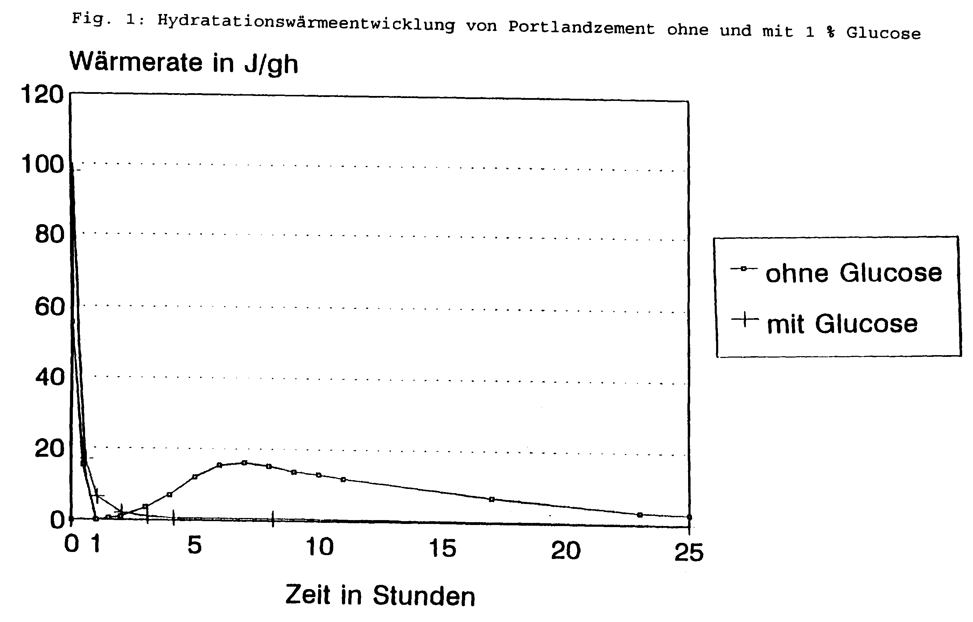

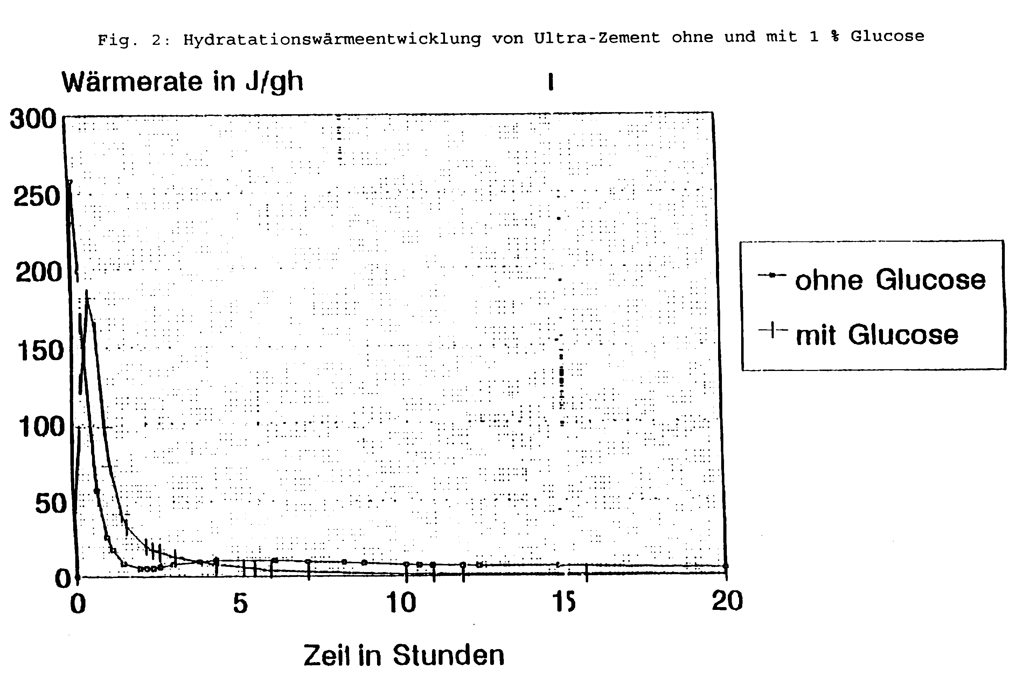

Es werden die DCA-Kurven von Portlandzement und Ultra-Zement ohne und unter Zusatz von 1 % Glucose als Modellsubstanz für potentielle Inhaltsstoffe reproduzierbarer Rohstoffe aufgenommen (Fig.1 und 2). Während bei Portlandzement durch die Glucose die Ausbildung des 2.Hydratationswärmemaximums, welches die Erhärtungsphase widerspiegelt, völlig verhindert wird, wirkt der gleiche Anteil Glucose bei Ultra-Zement nur geringfügig verzögernd, also nicht festigkeitsreduzierend. Dementsprechend ergeben sich Druckfestigkeiten, geprüft an Normprismen unter 1 % Glucosezusatz, von 42 N/mm² für Wiener Zement nach 24 Stunden Lagerung.Das entspricht weitgehend dem Festigkeitswert ohne Glucosezusatz. Die mit Portlandzement unter 1 % Glucosezusatz hergestellten Normprismen binden nicht ab und lassen sich auch nach 28 Tagen nicht prüfen.

Die Vorteile von Ultra-Zement bei der Herstellung von Verbundwerkstoff-Formteilen niedriger bis hoher Rohdichte werden an den nachfolgenden Ausführungsbeispielen erläutert.

### Beispiel 2

Bei der Herstellung von Dämmstoffen, z.B. Holzwolle-Leichtbauplatten lassen sich unter Einsatz des Ultra-Zementes gegenüber Portlandzement als Bindemittel alle Holzarten unabhängig von Einschlag- und Lagerzeit und ohne Zusatz von Abbindebeschleunigern verarbeiten, wobei die Ausschalzeiten wesentlich reduziert werden können, ohne daß die vorgegebene Normfestigkeit unterschritten wird, wie am Beispiel von Kiefern-, Pappel- und Birkenholz verdeutlicht werden soll.

Die Platten der Dicke 50 wurden nach dem Verfahren gemäß der Erfindung durch Mischen der Rohstoffe (Wasser/Zement-Faktor: 0,6; Holz/Zement-Faktor: 0,4), Einfüllen in Formen, leichtes Verdichten und Ausschalen hergestellt. Die Ausschalzeiten lagen für Platten mit Portlandzement bei 24 Stunden, während die Platten mit Ultra-Zement spätestens nach 4 Stunden ausgeschalt werden konnten.

Die ausgehärteten und klimatisierten Platten hatten eine Rohdichte von 400 kg/m³. Die vorgegebene Normfestigkeit von 0,20 N/mm² wurde bei der Verwendung von Portlandzement nur mit dem als nicht inhibierend bekannten Kiefernholz erreicht. Dagegen wurde mit Ultra-Zement die Normfestigkeit durchgängig erfüllt bzw. überboten.

| Holzart | Druckspannung bei 10 % Stauchung, N/mm² | |
|---|---|---|
| | Portlandzement | Ultra-Zement |
| Kiefernholz | 0,25 | 0,30 |
| Pappelholz | 0,10 | 0,27 |
| Birkenholz | 0,06 | 0,30 |

### Beispiel 3

Es wurden Leichtbausteine entsprechend Holzbeton mit Portlandzement und Ultra-Zement unter Einsatz von Kiefernholzschnizzeln bzw. zu Partikeln aufbereiteter Halme von Miscanthus sinensis Giganteus (Familie Süßgräser) hergestellt. Der Wasser/Zement-Faktor betrug 0,6, der Partikel/Bindemittelanteil 0,34. Die Steine wurden nach dem Abbinden entformt, wobei die Ausschalzeiten für die Steine mit Portlandzement das 10-fache der Steine mit Ultra-Zement betrugen. Die klimatisierten Steine wurden auf Druckspannung bei 10 % Stauchung und Druckfestigkeit geprüft. Die Steine hatten eine Rohdichte von 600 kg/m³. Die Prüfwerte sind nachfolgend zusammengestellt.

| Art der Prüfung | Portlandzement | | Ultra-Zement | |
|---|---|---|---|---|
| | Fichtenholzspäne | Miscanthuspartikel | Fichtenholzspäne | Miscanthuspartikel |
| Druckspannung bei 10 % Stauchung in N/mm² | 0,81 | nicht prüfbar | 1,22 | 0,96 |
| | | | | |
| Druckfestigkeit in n/mm² | 1,05 | nicht prüfbar | 1,26 | 1,08 |

Bei der Verwendung von Fichtenholz ergeben sich bei beiden Zementen die erforderlichen Festigkeitswerte. Sie liegen jedoch mit Portlandzement als Matrix unter denen der mit Ultra-Zement als Matrix hergestellten Steinen. Außerdem betrug die Ausschalzeit der Steine mit Portlandzement das 10-fache der Steine mit Ultra-Zement. Die bei Verwendung von Miscanthus hergestellten Steine entwickelten bei Portlandzement als Matrix keine prüfbaren Festigkeiten, während der Ultra-Zement als Matrix die erforderliche Festigkeitsentwicklung aufwies. Die für Miscanthus ausgewiesene Hydratationsstörung für Portlandzement ist auf die in dem Gras enthaltenen Inhaltsstoffe, vorwiegend Glucose, zurückzuführen. Mit Ultra-Zement führen diese Inhaltsstoffe zu keiner negativen Beeinflussung der Hydratation.

### Beispiel 4

Es wurden Bauplatten in Analogie zu zementgebundenen Spanplatten hergestellt. Als Matrix wurde wiederum Portlandzement bzw. Ultra-Zement eingesetzt.Bei der Verwendung von Portlandzement wurde in Anlehnung an die bekannten Rezepturen mit Abbindebeschleuniger gearbeitet. Als Bewehrungspartikel fungierten Fichtenholzspäne und speziell aufbereitete Halme von Miscanthus sinensis Giganteus. Die hergestellte Mischung hatte eine Feuchte von 42 %. Der Partikel/Bindemittel-Faktor betrug 0,36. Das Mischgut wurde zur Vliesherstellung massenmäßig so dosiert, daß die Platten bei einer Dicke von 10 mm eine Rohdichte von 1.200 kg/m³ aufweisen. Die Vliese wurden in der Presse verdichtet. Bei den mit Ultra-Zement hergestellten Platten reichte unabhängig vom eingesetzten Bewehrungspartikel bei Normaltemperaturen eine Preßzeit von 20 Minuten, um die Manipulierbarkeit der Platten zu gewährleisten. In einer Heißpresse konnten die Preßzeiten auf 10 Minuten reduziert werden. Die mit Portlandzement hergestellten Platten mußten nach dem Verdichten in Spanngerüste eingebracht werden, da die langsam einsetzende Festigkeitsentwicklung von Portlandzement kurze Preßzeiten nicht gestattet. Die Platten wurden nach 17 Stunden entspannt. Nach Aushärtung und Klimatisierung wurden die Platten auf ihre Festigkeiten geprüft.

| Art der Prüfung | Portlandzement | | Ultra-Zement | |
|---|---|---|---|---|
| | Fichtenholzspäne | Miscanthuspartikel | Fichtenholzspäne | Miscanthuspartikel |
| Biegefestigkeit in N/mm² | 19,2 | 1,36 | 18,5 | 10,2 |
| | | | | |
| E-Modul in N/mm² | 6800 | 390 | 6400 | 4500 |

Die vorgegebenen Normwerte von 9 N/mm² für die Biegefestigkeit und 4500 N/mm² für den E-Modul werden unter Verwendung von Wiener Zement unter Zusatz beider Lignocellulosearten erreicht. Unter Verwendung von Portlandzement mit Miscanthuspartikel liegen die Festigkeitswerte trotz Verwendung von Abbindebeschleunigern weit unter der Norm.

## Patentansprüche

1. Verfahren zur Herstellung von dauerbeständigen Verbundwerkstoff-Formteilen, insbesondere zur Herstellung von Dämmstoffen, Leichtbausteinen und Bauplatten, bestehend aus den Hydratationsprodukten eines Bindemittels und Leichtzuschlag- bzw. Bewehrungsstoffen, dadurch gekennzeichnet, daß als Bindemittel eine Mischung aus den folgenden Anteilen (in Gew.-%, bezogen auf die Bindemittelmischung) :
10 % bis 30 % Calciumaluminatsulfat (C₄A₃S)
5 % bis 20 % Anhydrit (CS)
50 % bis 80 % Portlandzement
und als organischer Leichtzuschlag- bzw. Bewehrungsstoff Holz und andere nachwachsende Rohstoffe mit einem Gehalt an wasser- und alkalilöslichen Inhaltsstoffen eingesetzt werden.

2. Verfahren nach Anspruch 1, dadurch gekennzeichnet, daß als Leichtzuschlag- bzw. Bewehrungsstoffe alle Arten Holz, unabhängig von ihrer Herkunft und Lagerungsdauer, und andere nachwachsende Rohstoffe wie Zuckerrohrbagasse, Kokosnußfasern und -mark, Getreide- und Reisstroh, Flachs- und Hanfschäben, Baumwollefasern und -stengel, Mais- und Sonnenblumenstengel bzw. deren Mark, des weiteren Bambusse und Gräser, speziell Sorten der Art Miscanthus sinensis, in der entsprechend ihrer Funktion mechanisch aufbereiteten Form eingesetzt werden.

3. Verfahren nach Anspruch 1 und 2, dadurch gekennzeichnet, daß das spezielle Bindemittel unter Verwendung der in Anspruch 2 aufgeführten Stoffe zur Herstellung von Formteilen analog den Verfahren zur Herstellung von Holzwolleleichtbauplatten, Holzbetonsteinen bzw. zementgebundenen Spanplatten eingesetzt wird.

4. Verfahren nach den Ansprüchen 1 bis 3, dadurch gekennzeichnet, daß zur Herstellung von Formteilen analog den im Anspruch 3 angeführten Verfahren mit dem Bindemittel, Zuschlagstoffen und Wasser ein Vlies gebildet wird und anschließend ein Verdichten bzw. Verpressen während einer relativ kurzen Zeitspanne vorgenommen wird.

5. Verfahren nach den Ansprüchen 1 bis 4, dadurch gekennzeichnet, daß durch Temperaturerhöhung in der Presse die Preßzeit auf wenige Minuten reduziert werden kann.

6. Verfahren nach Anspruch 5, dadurch gekennzeichnet, daß der Preßvorgang in einer kontinuierlich arbeitenden Bandpresse oder einer Ein- oder Mehretagenpresse erfolgt.

7. Verfahren nach einem der vorhergehenden Ansprüche, dadurch gekennzeichnet, daß zu der Mischung aus Bindemittel und nachwachsendem Rohstoff andere anorganische Zuschlagstoffe als Füll-, Reaktions- oder Leichtzuschlagstoffe zugegeben werden.

8. Verfahren nach einem der vorhergehenden Ansprüche, dadurch gekennzeichnet, daß in die Mischung andere Bewehrungsfasern, insbesondere Glas- und synthetische Fasern (PAN, PVA u.a.) eingebracht werden.

## Claims

1. Method of producing durable composite mouldings, especially for preparing insulating materials, light weight building blocks and building boards, consisting of the hydration products of a binding agent and of light aggregates and/or reinforcing materials, characterized in that a mixture of the following components (in weight percent, based on the binder mixture) is used as binding agent:
10 % to 30 % of calcium aluminate sulfate (C₄A₃S)
5 % to 20 % of anhydrite (CS)
50 % to 80 % of Portland cement
and in that wood and other reproducible raw materials containing water-soluble and alkali-soluble substances are used as organic light weight aggregates and/or reinforcing material.

2. Method according to claim 1, characterized in that all types of wood, independent of their origin and of their storage duration, and other reproducible raw materials, such as e.g. sugar cane bagasse, coconut fibres and coconut medulla, cereal straw and rice straw, flax and hemp scarpings, cotton fibres and stalks, maize and sunflower stalks and/or the medulla thereof, furthermore bamboos and grasses, especially varieties of the species Miscanthus sinensis, in the mechanically processed form corresponding to their function, are used as light weight aggregates and/or reinforcing materials.

3. Method according to claims 1 and 2, characterized in that the specific binding agent, together with an aggregate selected from the materials recited in claim 2, are used for the preparation of composite mouldings, in analogy to methods of preparing light weight building boards from wood shavings, building bricks from wood concrete and/or cement bonded chip boards.

4. Method according to claims 1 to 3, characterized in that a mat is formed from the binding agent, aggregates and water and that said mat is subsequently compacted and/or compressed during a relatively short period of time, for producing composite mouldings in analogy to the processes cited in claim 3.

5. Method according to claims 1 to 4, characterized in that the compression time can be reduced to a few minutes by increasing the temperature of the press.

6. Method according to claim 5, characterized in that the compressing operation is carried out in a continuously operating belt typ press or in a singleplaten press or in a multiplaten press.

7. Method according to anyone of the preceding claims, characterized in that further inorganic aggregates are added as fillers, reaction additives or light weight aggregates to the mixture of binding agent and reproducible raw material.

8. Method according to anyone of the preceding claims, characterized in that additional reinforcing fibres, especially glass fibres and synthetic fibres (PAN, PVA and others) are incorporated into the mixture.

## Revendications

1. Procédé de fabrication de pièces moulées en matériau composite, stables, en particulier pour la fabrication de matériaux amortisseurs, de blocs de construction légers et de plaques de construction, constitués de produits d'hydratation d'un liant et d'additifs légers ou matériaux d'armature, caractérisé en ce que, en tant que liant, on utilise un mélange formé des constituants suivants (en % en poids, par rapport au mélange de liant ) :
10 % à 30 % d'aluminate-sulfate de calcium (C₄A₃S)
5 % à 20 % d'anhydrite (CS)
50 % à 80 % de ciment de Portland
et en tant qu'additifs légers ou matériaux d'armature, on utilise du bois ou d'autres matières premières qui se renouvellent, contenant des matières solubles dans l'eau et les alcalis.

2. Procédé selon la revendication 1, caractérisé en ce que, en tant qu'additifs légers ou matériaux d'armature, on peut utiliser tous les types de bois, indépendamment de leur origine et de leur durée de conservation, et d'autres matières premières qui se renouvellent, telles que la bagasse brute, les fibres et la pulpe de noix de coco, les matériaux à base de céréales et de riz, les raclures de lin et de chanvre, les fibres et les tiges de coton, les tiges et pulpes de maïs et de tournesol, ainsi que le bambou et des graminés, des espèces particulières de Miscanthus sinensis, sous une forme obtenue par un traitement mécanique correspondant à leur fonction.

3. Procédé selon les revendications 1 et 2, caractérisé en ce qu'un liant spécial est utilisé, en cas de mise en oeuvre des matériaux mentionnés dans la revendication 2, pour la fabrication de pièces moulées, de manière analogue au procédé de fabrication de plaques de construction légères en fibres de bois, de blocs en bois-béton et de panneaux de particules liées par du ciment.

4. Procédé selon les revendications 1 à 3, caractérisé en ce que pour la fabrication de pièces moulées de manière analogue au procédé décrit dans la revendication 3, on forme une pâte avec le liant, les additifs et l'eau, et ensuite on effectue un compactage ou une compression pendant une période relativement courte.

5. Procédé selon les revendications 1 à 4, caractérisé en ce que par élévation de la température dans la presse, on peut réduire le temps de pressage à quelques minutes.

6. Procédé selon la revendication 5, caractérisé en ce que l'opération de pressage est réalisée dans une presse à bande fonctionnant en continu ou dans une presse à un ou plusieurs étages.

7. Procédé selon l'une quelconque des revendications précédentes, caractérisé en ce qu'au mélange du liant et des matières premières qui se renouvellent on ajoute d'autres additifs inorganiques tels que des charges, des additifs réactionnels ou des additifs légers.

8. Procédé selon l'une quelconque des revendications précédentes, caractérisé en ce que dans le mélange on introduit d'autres fibres d'armature, en particulier des fibres de verre et synthétiques (PAN, PVA, entre autres).
